# EUROPEAN PATENT SPECIFICATION

(11) **EP 4 184 696 B1**
(45) Date of publication and mention of the grant of the patent: **06.05.2026**
(21) Application number: 22739626.4
(22) Date of filing: 11.01.2022
(51) Int. Cl.: H01M 50/358, H01M 50/383, H01M 50/204

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 15.01.2021 KR 20210005833; 04.01.2022 KR 20220000798
(43) Date of publication of application: 24.05.2023
(73) Proprietor: LG Energy Solution, Ltd., Seoul 07335 (KR)
(72) Inventor: KIM, Kwangmo, Daejeon 34122 (KR); SEONG, Junyeob, Daejeon 34122 (KR); JUNG, Hyemi, Daejeon 34122 (KR); BYOUN, Dayoung, Daejeon 34122 (KR)
(74) Representative: Goddar, Heinz J.
(86) International application number: PCT/KR2022/000475
(87) International publication number: WO 2022/154431

(56) References cited:
- WO-A1-2013/121990
- WO-A1-2013/122005
- WO-A1-2019/163550
- CN-U- 210 576 118
- CN-Y- 201 171 058
- JP-A- 2012 079 510
- KR-A- 20170 135 469
- KR-A- 20180 113 855
- KR-A- 20190 064 887
- KR-A- 20200 069 720
- US-B2- 9 034 497

## Description

### [TECHNICAL FIELD]

The present disclosure relates to a battery module and a battery pack including the same, and more particularly, to a battery module with improved safety and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, a lithium secondary battery, and the like. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate each coated with the positive electrode active material and the negative electrode active material are disposed with a separator being interposed between them, and a battery case that seals and houses the electrode assembly together with an electrolyte solution.

Generally, the lithium secondary battery may be classified based on the shape of the exterior material into a can type secondary battery in which the electrode assembly is mounted in a metal can, and a pouch-type secondary battery in which the electrode assembly is mounted in a pouch made of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or in parallel to form a cell stack, thereby improving capacity and output. In addition, one or more battery modules may be mounted together with various control and protection systems such as BDU(battery disconnect unit), BMS (battery management system) and a cooling system to form a battery pack.

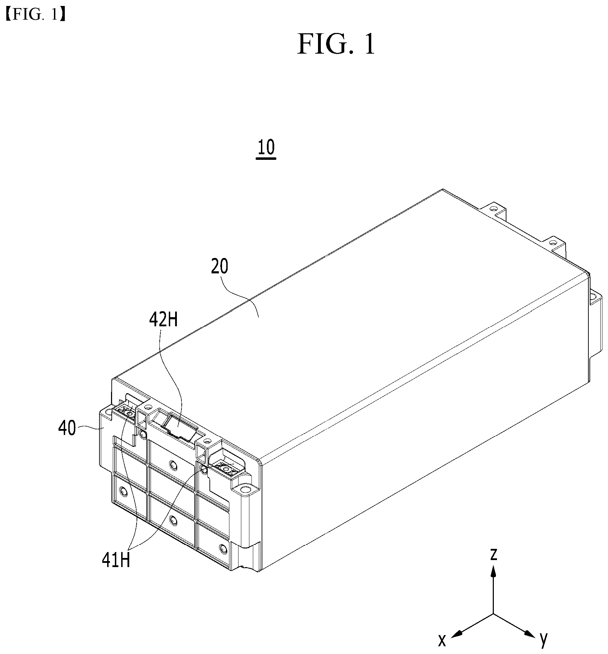

Fig. 1 is a perspective view showing a conventional battery module.

Referring to Fig. 1, the conventional battery module 10 can be manufactured by housing a battery cell stack (not shown) in the module frame 20 and then joining the end plate 40 to the opened portion of the module frame 20. At this time, a terminal busbar opening 41H where a part of the terminal busbar is exposed and a module connector opening 42H where a part of the module connector is exposed can be formed in the end plate 40. The terminal busbar opening 41H is for guiding the high voltage (HV) connection of the battery module 10, and the terminal busbar exposed through the terminal busbar opening 41H can be connected to another battery module or a BDU (battery disconnect unit). The module connector opening 42H is for guiding the LV (Low voltage) connection of the battery module 10, and the module connector exposed through the module connector opening 42H is connected to a BMS (battery management system) and can transmit voltage information, temperature information, or the like of the battery cell.

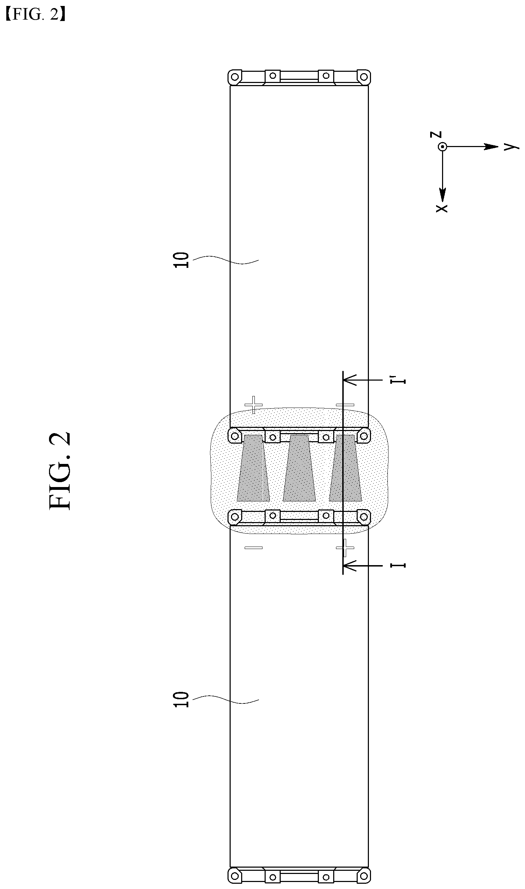

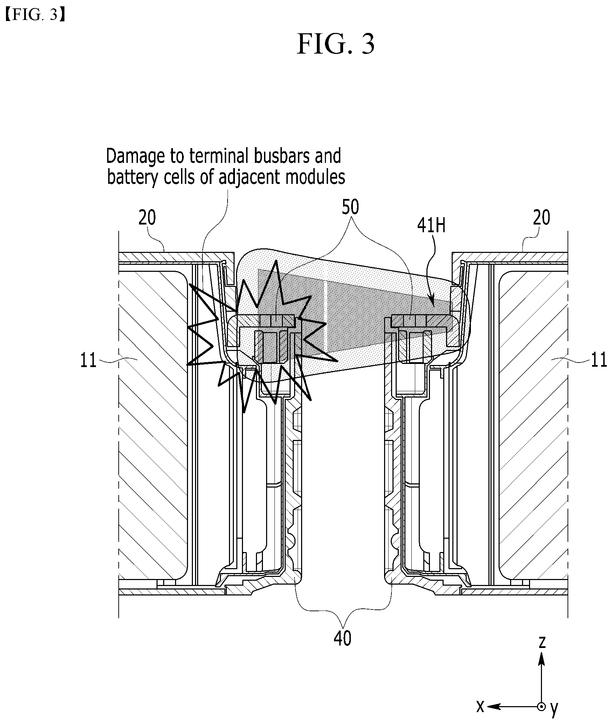

Fig. 2 is a view showing a state at the time of ignition of the battery module in the conventional battery pack in which the battery module of Fig. 1 is mounted. Fig. 3 is a cross-sectional view taken along the cutting line I-I' of Fig. 2, which is a cross-sectional view showing the appearance of a flame that affects adjacent battery modules during ignition of a conventional battery module.

Referring to Figs. 1 to 3, the conventional battery module 10 includes a battery cell stack in which a plurality of battery cells 11 are stacked, a module frame 20 that houses the battery cell stack, and end plates 40 that are formed on the front and rear surfaces of the battery cell stack.

When physical, thermal or electrical damage including overcharging occurs to the battery cell, the internal pressure of the battery cell 11 increases and exceeds a limit value of the fusion strength of the battery cell 11. In this case, the high-temperature heat, gas, and flame generated in the battery cell 11 can be discharged to the outside of the battery cell 11.

At this time, the high-temperature heat, gas and flame may be discharged through the openings 41H and 42H formed in the end plate 40. However, in the battery pack structure in which a plurality of battery modules 10 are arranged so that the end plates 40 face each other, the high-temperature heat, gas and flame ejected from the battery module 10 may affect the adjacent battery module 10. Thereby, the terminal busbar or the like formed on the end plate 40 of the adjacent battery module may be damaged, and high-temperature heat, gas and flame may enter the interior of the battery module 10 via the openings formed in the adjacent end plates 40 of the battery module 10 to damage other electrical components including the plurality of battery cells 11. In addition, this leads to heat propagation of the adjacent battery modules 10, which cause a chain ignition in the battery pack.

Therefore, when heat propagation occurs within the battery module, in order to minimize the impact on the adjacent battery modules, there is a need to develop a technology capable of controlling a high-temperature flame.

The document KR 2018 0113 855 A discloses a battery module including a vent hole and a flame-retardant structure for guiding and suppressing the discharge of gas and flame generated during thermal runaway through a curved exhaust path.

The document WO 2013/122 005 A1 discloses a battery fire protection device including a housing with a communication part comprising a columnar portion and a cover structure, which guides gas and flame released from a battery safety valve along a bent path to suppress external fire discharge.

### [DETAILED DESCRIPTION OF THE INVENTION]

### [Technical Problem]

It is an object of the present disclosure to provide a battery module that can control the flame discharge passage when an ignition phenomenon occurs inside the battery module, and a battery pack including the same.

### [Technical Solution]

According to one embodiment of the present disclosure, there is provided a battery module comprising: a battery cell stack in which a plurality of battery cells are stacked; a module frame for housing the battery cell stack; and end plates for covering the front and rear surfaces of the battery cell stack, wherein at least one of the module frames or the end plates includes a venting part for discharging gas and flame, and wherein the venting part has a shape that guides the discharge passage of the gas and flame so as to be bent.

The venting part includes a through hole formed in at least one of the module frames and the end plates; a first cover part for covering the through hole; and a first opening formed on one side of the first cover part and communicating with the through hole.

An area of the first cover part may be larger than an opening area of the through hole.

An opening direction of the through hole may be different from an opening direction of the first opening.

An opening direction of the through hole and an opening direction of the first opening are perpendicular to each other.

The venting part further includes a second cover part for covering the through hole while being located on the opposite side of the first cover part with respect to the through hole; and a second opening formed on one side of the second cover part and communicating with the through hole.

An area of the second cover part may be larger than an opening area of the through hole.

An opening direction of the through hole may be different from an opening direction of the second opening.

An opening direction of the through hole and an opening direction of the second opening may be perpendicular to each other.

The discharge passage of the gas and flame may be bent at least twice by the first cover part and the second cover part.

The venting part guides discharge of the gas and flame in a direction parallel to one surface of at least one of the module frames and the end plates.

The battery module may further include an insulating cover located between the battery cell stack and the end plate, wherein the venting part is formed in the end plate, and an insulating cover opening may be formed at a position corresponding to the venting part of the insulating cover.

### [ADVANTAGEOUS EFFECTS]

According to embodiments of the present disclosure, the discharge passage of the flame generated within the battery module can be prevented from being in a straight line, thereby effectively regulating flame discharge without affecting the gas discharge function.

In addition, considering the nature of the flame with a strong straight-line tendency, the flame discharge passage can be prevented from being in a straight line, thereby preventing direct damages on adjacent battery modules.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a conventional battery module;
Fig. 2 is a view showing a state at the time of ignition of the battery module in the conventional battery pack in which the battery module of Fig. 1 is mounted;
Fig. 3 is a cross-sectional view taken along the cutting line I-I' of Fig. 2;
Fig. 4 is a perspective view showing a battery module according to an embodiment of the present disclosure;
Fig. 5 is an exploded perspective view of the battery module of Fig. 4;
Fig. 6 is a perspective view showing a battery cell included in the battery module of Fig. 5;
Fig. 7 is a perspective view showing the second end plate of the battery module of Fig. 4 by changing a viewing angle so that it can be seen from the front;
Fig. 8 is a perspective view showing an end plate and an insulating cover not representing the invention;
Fig. 9 is a cross-sectional perspective view showing a state cut along the cutting line A-A' of Fig. 8;
Fig. 10 is a cross-sectional view of the cut end plate and the insulating cover of Fig. 9 as viewed in the -y-axis direction on the xz plane;
Fig. 11 is a perspective view showing the end plate and the insulating cover of Fig. 8 by changing a viewing angle so that the surface facing the battery cell stack can be seen;
Fig. 12 is a perspective view showing a battery module not representing the invention;
Fig. 13 is a cross-sectional view showing a cross-section taken along the cutting line B-B' of Fig. 12;
Fig. 14 is a perspective view showing an end plate and an insulating cover according to the invention;
Fig. 15 is a cross-sectional perspective view showing a state cut along the cutting line C-C' of Fig. 14;
Fig. 16 is a cross-sectional view of the cut end plate and the insulating cover of Fig. 15 as viewed in the -y-axis direction on the xz plane; and
Fig. 17 is a perspective view showing the end plate and the insulating cover of Fig. 14 by changing a viewing angle so that the surface facing the battery cell stack can be seen.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

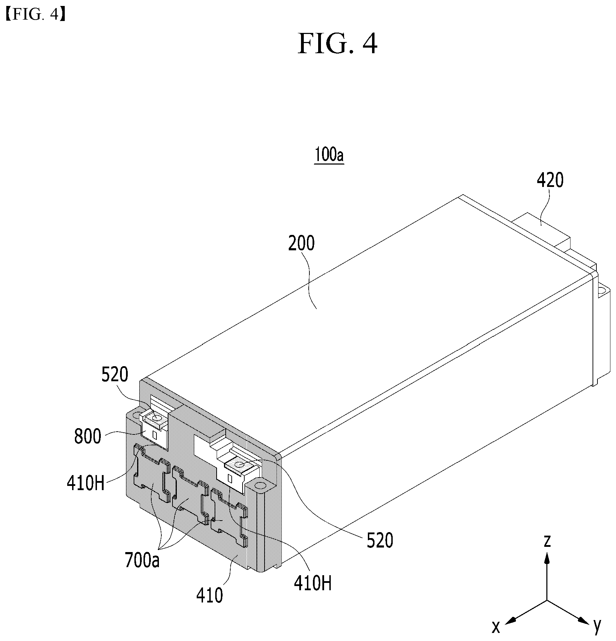

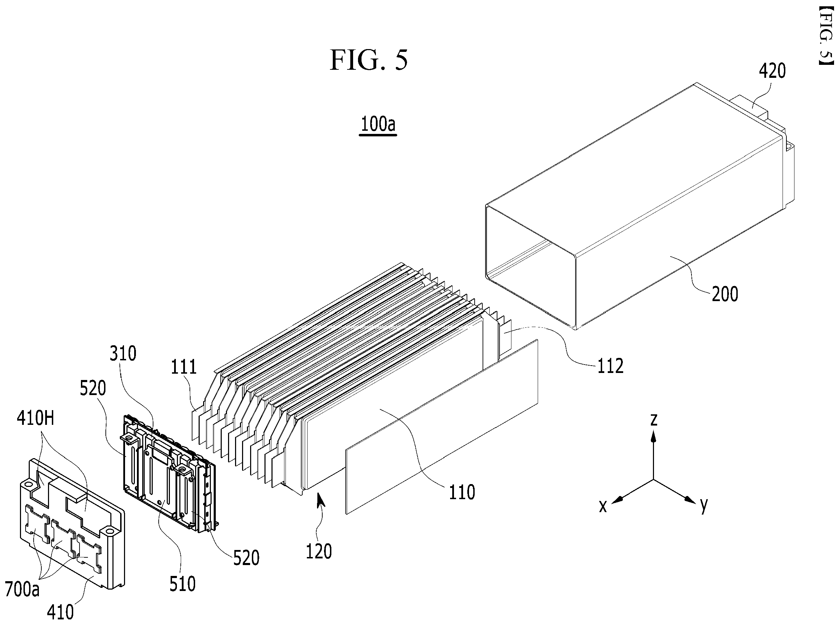

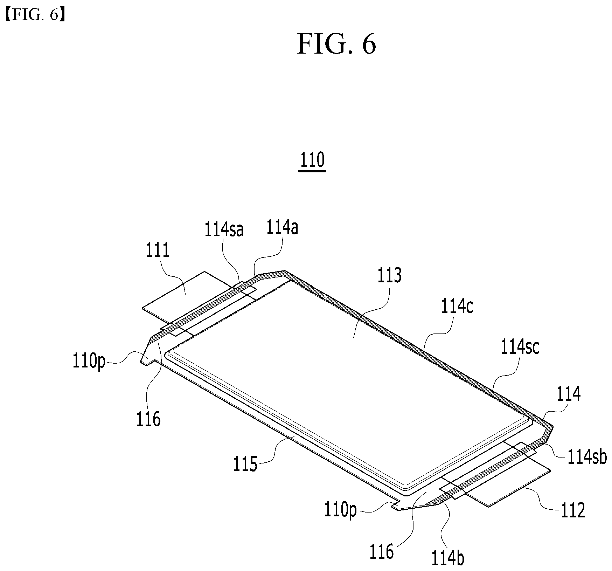

Fig. 4 is a perspective view showing a battery module according to an embodiment of the present disclosure. Fig. 5 is an exploded perspective view of the battery module of Fig. 4. Fig. 6 is a perspective view showing a battery cell included in the battery module of Fig. 5.

Referring to Figs. 4 to 6, a battery module 100a according to an embodiment of the present disclosure includes a battery cell stack 120 in which a plurality of battery cells 110 are stacked; a module frame 200 for housing the battery cell stack 120; and end plates 410 and 420 for covering the front surface and rear surface of the battery cell stack 120.

First, referring to Fig. 6, the battery cell 110 is preferably a pouch-type battery cell. For example, the battery cell 110 according to the present embodiment has a structure in which two electrode leads 111 and 112 face each other and protrude from one end 114a and the other end 114b of the cell main body 113, respectively. More specifically, the electrode leads 111 and 112 are connected to an electrode assembly (not shown), and protrude from the electrode assembly (not shown) to the outside of the battery cell 110.

On the other hand, the battery cell 110 can be manufactured by joining both end parts 114a and 114b of the cell case 114 and one side part 114c connecting them, in a state in which the electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure sealed by a method such as heat fusion, and the remaining other side part may be formed of a connection part 115. The cell case 114 may be formed of a laminated sheet containing a resin layer and a metal layer.

In addition, the connection part 115 may extend long along one edge of the battery cell 110, and a protrusion part 110p of the battery cell 110 called a bat-ear may be formed at an end part of the connection part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 includes a terrace part 116 formed to extend from the cell case 114 in a protruding direction of the electrode leads 111 and 112.

The battery cell 110 may be composed by a plurality of numbers, and the plurality of battery cells 110 may be stacked so as to be electrically connected to each other, thereby forming a battery cell stack 120. Referring to Fig. 5, the battery cells 110 can be stacked along the y-axis direction to form a battery cell stack 120. A first busbar frame 310 may be located on one surface of the battery cell stack 120 in the protruding direction (x-axis direction) of the electrode leads 111. Although not specifically shown, a second busbar frame may be located on the other surface of the battery cell stack 120 in the protruding direction (-x-axis direction) of the electrode leads 112 . The battery cell stack 120 and the first busbar frame 310 may be housed together with the module frame 200. The module frame 200 can protect the battery cell stack 120 housed inside the module frame 200 and the electrical components connected thereto from external physical impacts.

On the other hand, the module frame 200 can be opened in the protruding direction of the electrode leads 111 and 112 (x-axis direction, -x-axis direction), and end plates 410 and 420 may be located on opened both sides of the module frame 200, respectively. The two end plates 410 and 420 are referred to as a first end plate 410 and a second end plate 420, respectively. The first end plate 410 can be joined to the module frame 200 while covering the first busbar frame 310, and the second end plate 420 can be joined to the module frame 200 while covering the second busbar frame (not shown). That is, a first busbar frame 310 may be located between the first end plate 410 and the battery cell stack 120, and a second busbar frame (not shown) may be located between the second end plate 420 and the battery cell stack 120. Further, an insulating cover 800 (see Fig. 4) for electrical insulation may be located between the first end plate 410 and the first busbar frame 310.

The first end plate 410 and the second end plate 420 are located so as to cover the one surface and the other surface of the battery cell stack 120, respectively. The first end plate 410 and the second end plate 420 can protect the first busbar frame 310 and various electrical components connected thereto from external impacts. For this purpose, they must have a predetermined strength and may include a metal such as aluminum. Further, the first end plate 410 and the second end plate 420 may be joined to a corresponding edge of the module frame 200 by a method such as welding, respectively.

The first busbar frame 310 is located on one surface of the battery cell stack 120 to cover the battery cell stack 120 and at the same time, guide the connection between the battery cell stack 120 and an external device. Specifically, at least one of the busbars, the terminal busbar and the module connector may be mounted on the first busbar frame 310. In particular, at least one of the busbars, the terminal busbar and the module connector may be mounted on a surface opposite to the surface where the first busbar frame 310 faces the battery cell stack 120. In one example, Fig . 5 shows a state in which a busbar 510 and a terminal busbar 520 are mounted on the first busbar frame 310.

The electrode lead 111 of the battery cells 110 is bent after passing through the slit formed in the first busbar frame 310 and can be joined to the busbar 510 or the terminal busbar 520. The battery cells 110 constituting the battery cell stack 120 may be connected in series or in parallel by the busbar 510 or the terminal busbar 520. Further, the battery cells 110 can be electrically connected to an external device or circuit through the terminal busbar 520 exposed to the outside of the battery module 100a.

The first busbar frame 310 may include an electrically insulating material. The first busbar frame 310 restricts the busbar 510 or the terminal busbar 520 from making contact with the battery cells 110, except for the portion where the busbar 510 or the terminal busbar 520 is joined to the electrode leads 111, thereby preventing the occurrence of a short circuit.

On the other hand, as described above, the second busbar frame may be located on the other surface of the battery cell stack 120, and at least one of the busbar, terminal busbar, and module connector may be mounted on the second busbar frame. An electrode lead 112 can be joined to such a bus bar.

An opening in which at least one of the terminal busbar and the module connector is exposed can be formed in the first end plate 410 according to the present embodiment. The opening may be a terminal busbar opening or a module connector opening. In one example, as shown in Figs. 4 and 5, a terminal busbar opening 410H where the terminal busbar 520 is exposed can be formed in the first end plate 410. The terminal busbar 520 further includes an upwardly protruding portion as compared with the busbar 510. Such upwardly protruding portion is exposed to the outside of the battery module 100a via the terminal busbar opening 410H. The terminal busbar 520 exposed via the terminal busbar opening 410H may be connected to another battery module or a battery disconnect unit (BDU) to form a high voltage (HV) connection.

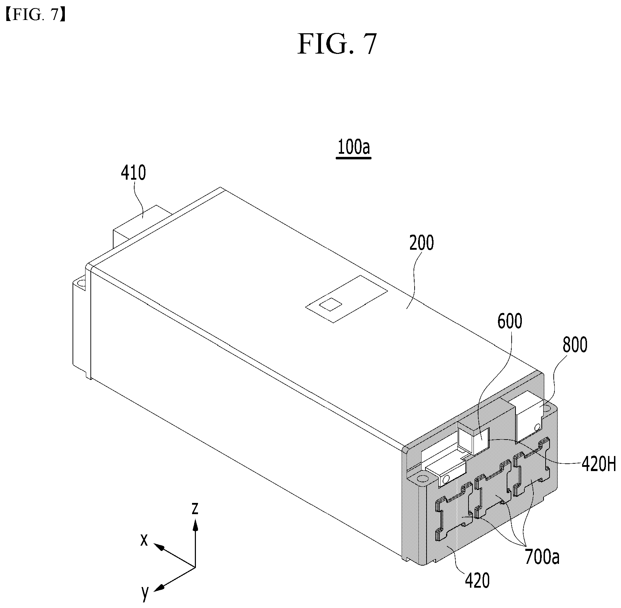

Fig. 7 is a perspective view showing the second end plate of the battery module of Fig. 4 by changing a viewing angle so that it can be seen from the front.

Referring to Fig. 7, as an example, a module connector opening 420H where the module connector 600 is exposed can be formed in the second end plate 420. This means that the module connector 600 is mounted on the above-mentioned second busbar frame. The module connector 600 can be connected to a temperature sensor, a voltage measuring member, or the like provided inside the battery module 100a. Such a module connector 600 is connected to an external BMS (battery management system) to form an LV (Low voltage) connection, and it performs a function of transmitting temperature information, voltage level and the like measured by the temperature sensor or the voltage measuring member to the external BMS.

The first end plate 410 and the second end plate 420 shown in Figs. 4, 5 and 7 are exemplary structures. According to another embodiment of the present disclosure, the module connector is mounted on the first busbar frame 310, and a terminal busbar can be mounted on the second busbar frame. Therefore, a module connector opening can be formed in the first end plate, and a terminal busbar opening can be formed in the second end plate.

On the other hand, the end plates 410 and 420 according to the present embodiment cover the front surface and rear surface of the battery cell stack 120, and the module frame 200 covers the upper surface, lower surface and both side surfaces of the battery cell stack 120. Here, the front surface means a surface of the battery cell stack 200 in the y-axis direction, and the rear surface means a surface of the battery cell stack 200 in the -y-axis direction. The upper surface means a surface of the battery cell stack 200 in the z-axis direction, the lower surface means a surface of the battery cell stack 200 in the -z-axis direction, and the both side surfaces mean the surfaces of the battery cell stack 200 in the x-axis and -x-axis directions, respectively. However, these are the surfaces indicated for convenience of explanation, and may vary depending on a position of an object, a position of an observer, or the like. As described above, the front surface and the rear surface of the battery cell stack 200 may be surfaces on which the protruding first and second electrode leads 111 and 112 of the battery cells 110 are located.

According to the present embodiment, at least one of the module frames 200 or the end plates 410 and 420 may include a venting part 700a for discharging gas and flame.

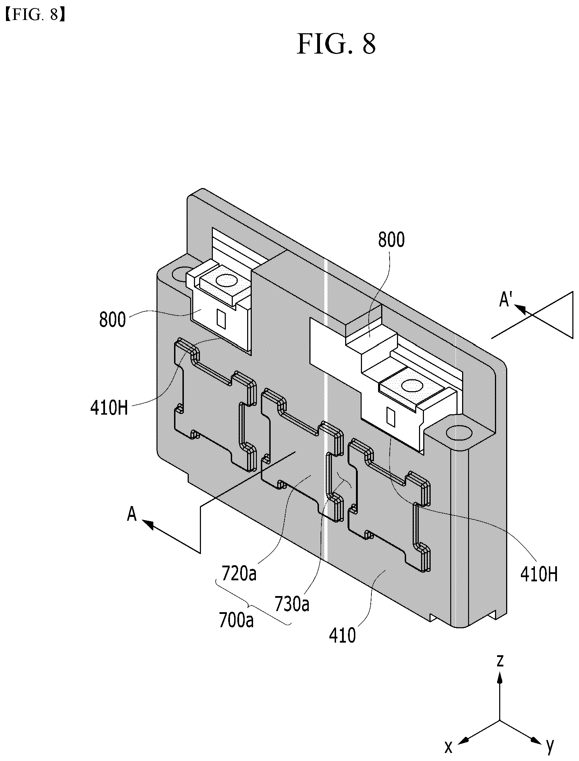

Hereinafter, an exemplary venting part formed on the first end plate will be described in detail with reference to Figs. 8 to 11. The first end plate 410 is mainly described in order to avoid repetition of the description, but the same or similar structure can be applied to the second end plate 420.

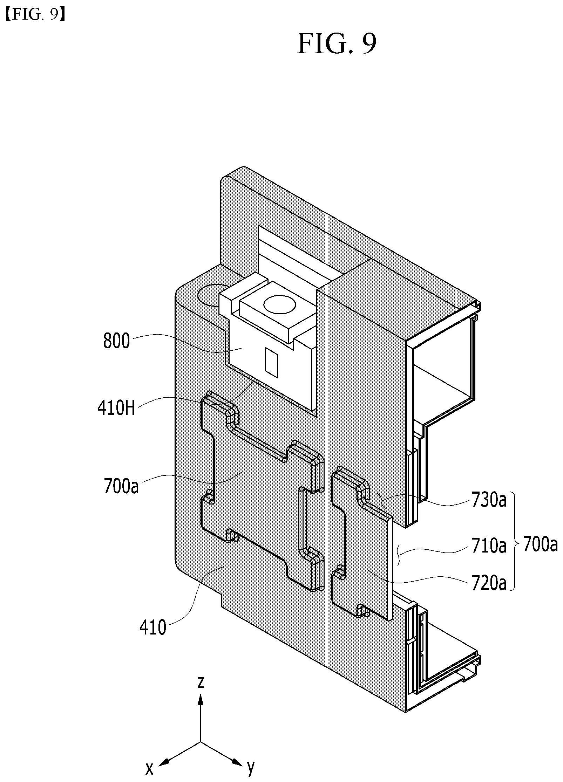

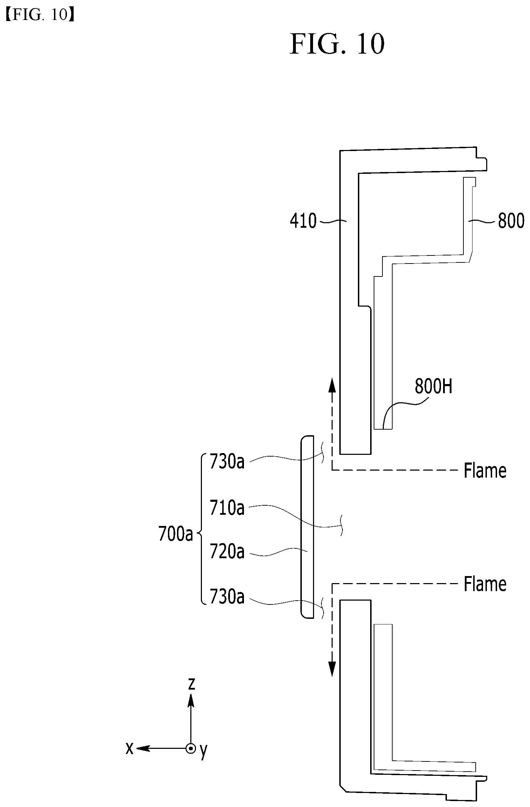

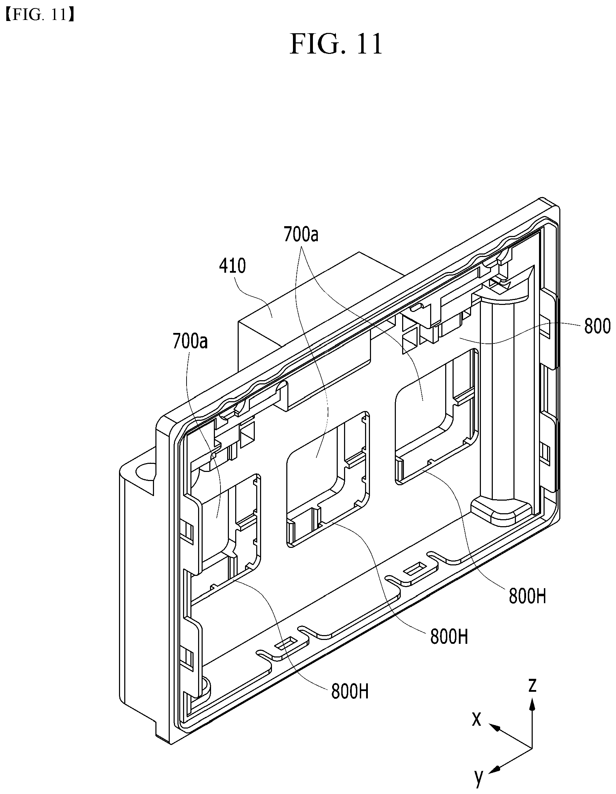

Fig. 8 is a perspective view showing an end plate and an insulating cover not representing the invention. Fig. 9 is a cross-sectional perspective view showing a state cut along the cutting line A-A' of Fig. 8. Fig. 10 is a cross-sectional view of the cut end plate and the insulating cover of Fig. 9 as viewed in the -y-axis direction on the xz plane. Fig. 11 is a perspective view showing the end plate and the insulating cover of Fig. 8 by changing a viewing angle so that the surface facing the battery cell stack can be seen.

Referring to Figs. 8 to 11, the venting part 700a has a shape that guides the discharge passage of the gas and flame so as to be bent. That is, the venting part 700a includes a passage that connects the interior of the battery module 100a wrapped by the module frame 200 and the end plates 410 and 420 to the outside, and the gas and flame are discharged through the passage, but the passage is not formed in a straight line, but includes a bent part and thus guides the discharge passage of the gas and flame so as to be bent.

Specifically, the venting part 700a includes a through hole 710a formed in the first end plate 410; a first cover part 720a for covering the through hole 710a; and a first opening 730a formed on one side of the first cover part 720a and communicating with the through hole 710a. Here, the first cover part 720a does not cover one side of the through hole 710a as if completely sealed, but is positioned apart from each other by a predetermined interval. The first opening 730a may be formed by a space in which the first cover part 720a is spaced apart from one surface of the first end plate 410.

The through hole 710a and the first opening 730a may be passages through which the gas and flame described above are discharged.

The first cover part 720a may have a shape that covers the through hole 710a from the outside. Further, the first cover part 720a may be connected to the first end plate 410 at a portion where the first opening 730a is not formed. In order to form such a structure, the area of the first cover part 720a may be larger than the opening area of the through hole 710a.

Although it is illustrated that four first openings 730a are formed in the y-axis direction, the -y-axis direction, the z-axis direction, and the -z-axis direction with respect to one venting part 700a, the number of the first openings 730a is not particularly limited. Further, the opening direction of the first opening 730a is not limited as long as it does not coincide with the opening direction of the through opening 710a.

In the case of the conventional battery module 10, as described above, high-temperature heat, gas, and flame is intensively discharged through the terminal busbar opening 41H or the module connector opening 42H, which may give damages to the adjacent battery modules 10.

On the other hand, in the case of another battery module 100a in the present embodiment, a separate venting part 700a is provided, whereby the discharge of gas or flame is dispersed, and the gas and flame discharged from the terminal busbar opening 410H and the module connector opening 420H can be significantly reduced.

Further, due to the first cover portion 720a covering the through hole 710a, gas or flame does not pass through the through hole 710a in a straight line. That is, as shown in Fig. 10, the venting part 700a including the first cover part 720a and the first opening part 730a can guide the discharge passage of the gas and flame so as to be bent.

Specifically, the opening direction of the through opening 710a and the opening direction of the first opening 730a may be different from each other. More specifically, the opening direction of the through hole 710a and the opening direction of the first opening 730a are perpendicular to each other. In one example, as shown in Fig. 10, the opening direction of the through hole 710a is a direction parallel to the x-axis, whereas the opening direction of the first opening 730a may be a direction parallel to the yz plane or a direction close to the yz plane. Thereby, the venting part 700a can guide the discharge of gas and flame in a direction parallel to one surface of the first end plate 410.

In the case of the high-temperature gas, even if the discharge passage is formed so as to be bent, there is no particular limitation on the discharge to the outside. On the other hand, in the case of a flame or spark with a strong straight-line tendency, if the discharge passage is designed so as to be bent as in the present embodiment, it is possible to restrict the direct injection toward the adjacent battery modules or the like. The venting part 700a according to the present embodiment can suppress the flame from being directly discharged, and even if the flame is discharged, the direction is regulated, and damage to other adjacent battery modules can be minimized. That is, there is an advantage that the damage caused by the flame can be reduced without deteriorating the gas discharge function.

The number of such venting parts 700a is not particularly limited, and can be arranged by a single number or a plurality of numbers. In one example, Figs. 8 to 11 show that three vent parts 700a are provided.

On the other hand, as described above, an insulating cover 800 for electrical insulation can be located between the first end plate 410 and the first busbar frame 310 (see Fig. 5). Any material that is electrically insulating can be applied as an insulating cover 800 without limitation. At this time, as shown in Fig. 11, an insulating cover opening 800H may be formed at a position corresponding to the venting part 700a of the insulating cover 800. A high-temperature gas or flame inside the battery module may sequentially pass through the insulating cover opening 800H and the venting part 700a and be discharged to the outside.

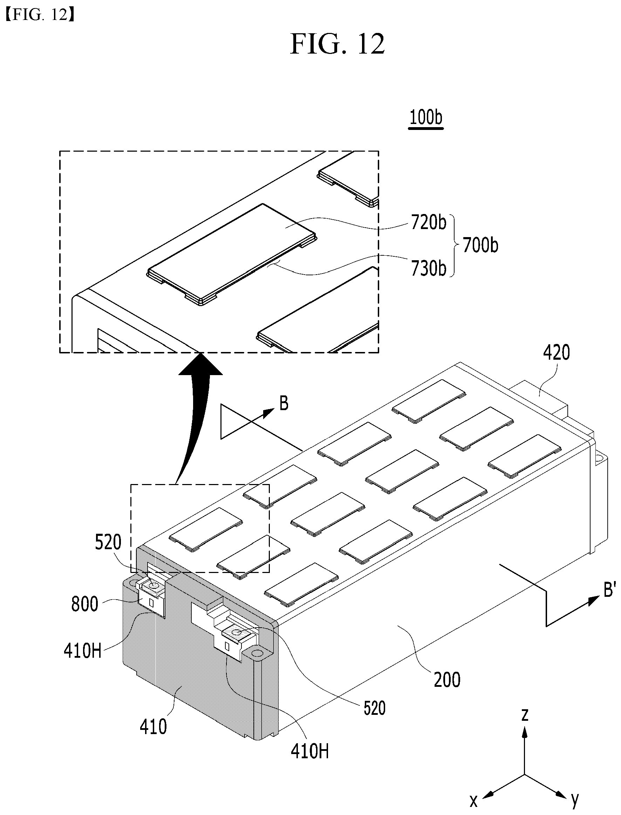

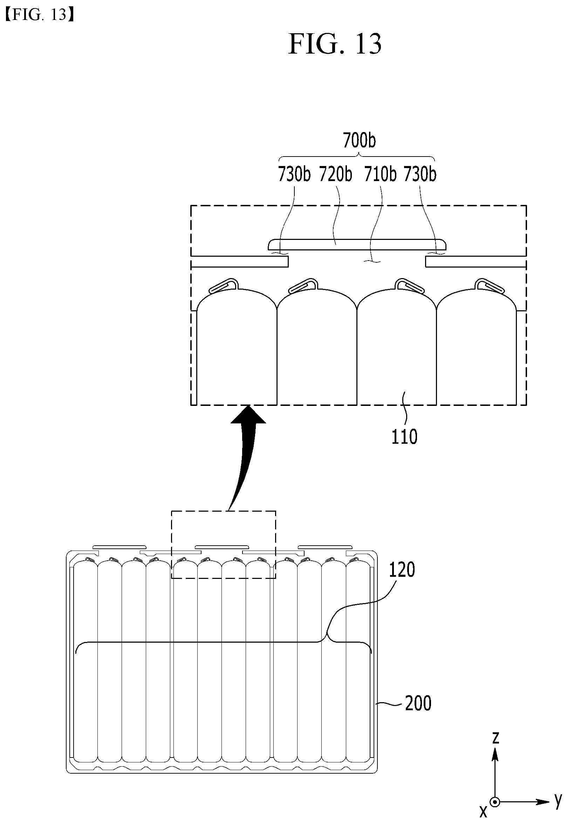

Next, another exemplary venting part formed in the module frame will be described in detail with reference to Figs. 12 and 13.

Fig. 12 is a perspective view showing a battery module not representing the invention. Fig. 13 is a cross-sectional view showing a cross-section taken along the cutting line B-B' of Fig. 12.

Referring to Figs. 12 and 13, the battery module 100b includes a module frame 200 for housing the battery cell stack 120 and a venting part 700b formed in the module frame 200. The venting part 700b has a shape that guides the discharge passage of the gas and flame so as to be bent. That is, the venting part 700b includes a passage that connects the interior of the battery module 100b wrapped by the module frame 200 and the end plates 410 and 420 to the outside, and the gas and the flame are discharged through the passage, but the passage is not composed only of a straight line, but includes a bent portion, so that the discharge passage of the gas and the flame is guided so as to be bent.

The venting part 700b includes a through hole 710b formed in the module frame 200; a first cover part 720b for covering the through hole 710b; and a first opening 730b formed on one side of the first cover part 720b and communicating with the through hole 710b. Similar to the one described above, here, the first cover part 720b does not cover one side of the through hole 710b as if completely sealed, respectively, but may be positioned apart from each other by a predetermined interval. The first opening 730a can be formed by a space where the first cover part 720b is spaced apart from one surface of the module frame 200.

The through hole 710b and the first opening 730b may be the passages through which the gas and flame are discharged as described above.

The first cover part 720b may have a shape that covers the through hole 710b from the outside. Further, the first cover part 720b may be connected to the module frame 200 at a portion where the first opening 730b is not formed. In order to form such a structure, the area of the first cover part 720b may be larger than the opening area of the through hole 710b.

Similar to the venting part 700a formed in the end plates 410 and 420, the venting part 700b according to the present embodiment includes a first cover part 720b and a first opening 730b, and thus can guide the discharge passage of the flame so as to be bent.

Specifically, the opening direction of the through hole 710b may be different from the opening direction of the first opening 730b. More specifically, the opening direction of the through hole 710b and the opening direction of the first opening 730b are perpendicular to each other. In one example, as shown in Fig. 13, the opening direction of the through hole 710b is a direction parallel to the z-axis, whereas the opening direction of the first opening 730b is a direction parallel to the xy plane or a direction close to the xy plane. Thereby, the venting part 700b can guide the discharge of the gas and flame in a direction parallel to one surface of the module frame 200. The venting part 700b according to the present embodiment has the advantage that damage due to flame can be reduced without deteriorating the gas discharge function. The details are omitted because they overlap with the contents explained above.

On the other hand, since the module frame 200 may have a relatively large area as compared with the end plates 410 and 420, the number of venting parts 700b may be increased as compared with the case where the end plates 410 and 420 are formed. Further, the opening area of the first opening 730b can be increased. The increased number of venting parts 700b or the opening area of the first opening 730b is more effective in dispersing gas or flame.

Further, since the venting part 700b is formed on one surface of the module frame 200, it is possible to reduce gas or flame itself discharged in the direction in which the end plate is located.

In particular, as shown in the figure, the venting parts 700b may be formed on the upper surface of the module frame 200. In this case, the discharge of gas or flame may be guided so as to occur at the upper part of the battery module 100b. Therefore, it is possible to reduce damage affecting other battery modules mainly disposed on the side surface.

On the other hand, the venting part 700a formed in the end plates 410 and 420 and the venting part 700b formed in the module frame 200 are distinguishably described, but the battery module according to another embodiment of the present disclosure may include both the venting part 700a formed in the end plates 410 and 420 and the venting part 700b formed in the module frame 200.

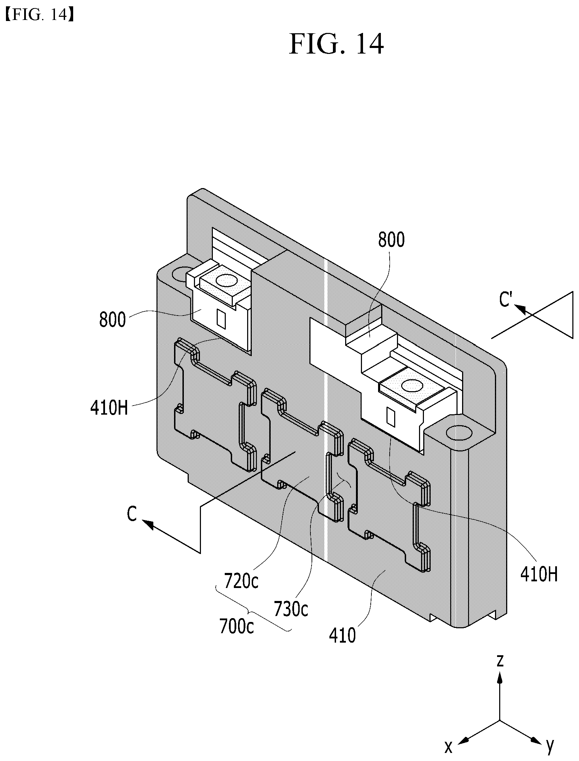

Next, a venting unit according to the invention will be described in detail with reference to Figs. 14 to 17. The first end plate 410 is mainly described in order to avoid repetition of the description, but the same or similar structure can be applied to the module frame 200 or the second end plate 420.

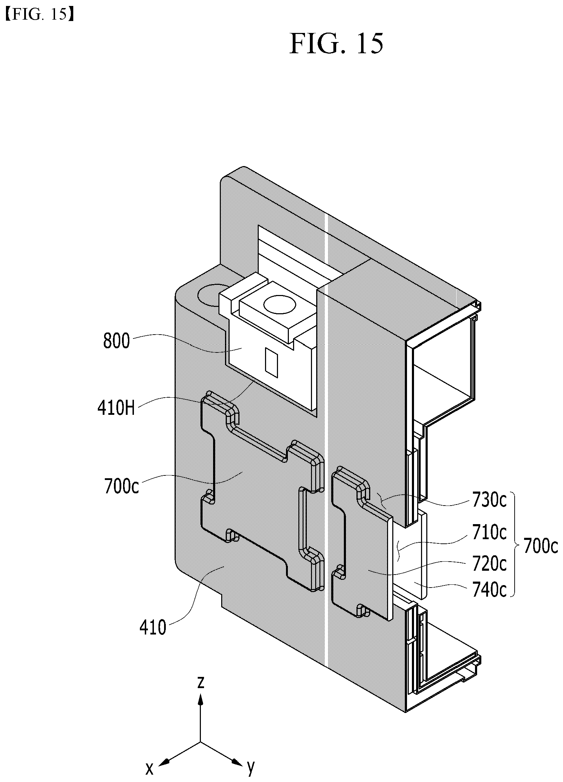

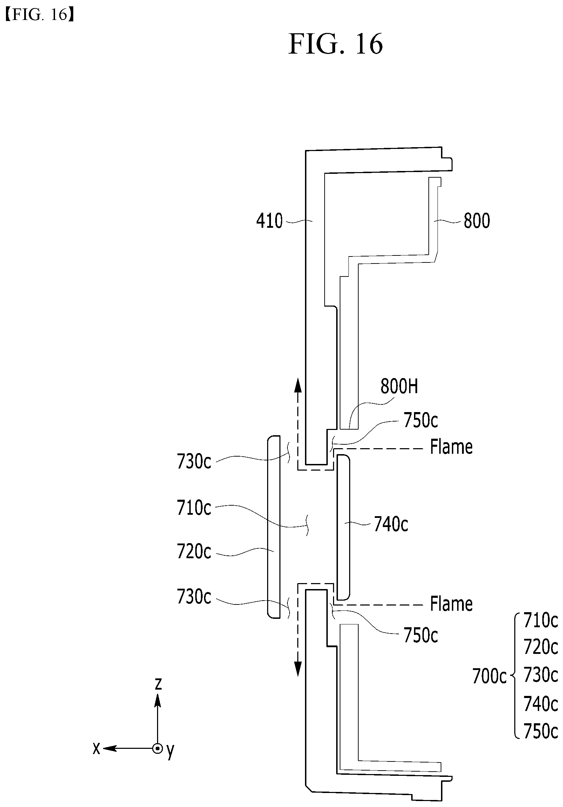

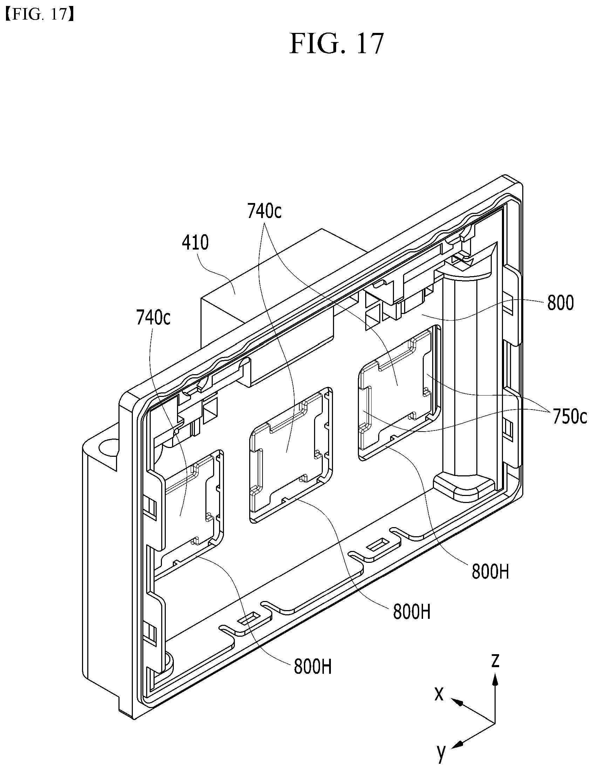

Fig. 14 is a perspective view showing an end plate and an insulating cover according to the invention. Fig. 15 is a cross-sectional perspective view showing a state cut along the cutting line C-C' of Fig. 14. Fig. 16 is a cross-sectional view of the cut end plate and the insulating cover of Fig. 15 as viewed in the -y-axis direction on the xz plane. Fig. 17 is a perspective view showing the end plate and the insulating cover of Fig. 14 by changing a viewing angle so that the surface facing the battery cell stack can be seen.

Referring to Figs. 14 to 17, the venting part includes a through hole 710c formed in the first end plate 410; a first cover part 720c for covering the through hole 710c; and a first opening 730c formed on one side of the first cover part 720c and communicating with the through hole 710c. Additionally, the venting part 700c further includes a second cover part 740c for covering the through hole 710c while being located on the opposite side of the first cover part 720c with respect to the through hole 710c; and a second opening 750c formed on one side of the second cover part 740c and communicating with the through hole 710c. That is, the venting part 700c according to the present embodiment may have a configuration in which a second cover part 740c and a second opening 750c are further added to the venting part 700a described above. The first cover part 720c and the second cover part 740c may be positioned apart from each other by a predetermined interval, instead of covering one side and the other side of the through hole 710a as if completely sealed, respectively. A first opening 730a can be formed by a space where the first cover portion 720c is spaced apart from one surface of the first end plate 410, and the second opening 750c can be formed by a space in which the second cover part 740c is spaced apart from the other surface of the first end plate 410.

The first opening 730c, the through hole 710c, and the second opening 750c may be passages through which the gas and flame are discharged.

The second cover part 740c and the first cover part 720c may be positioned so as to face each other with the through hole 710c interposed therebetween. More specifically, unlike the first cover part 720c that covers the through hole 710c from the outside, the second cover part 740c may have a shape that covers the through hole 710c from the inside. Further, the second cover part 740c may be connected to the first end plate 410 at a portion where the second opening 750c is not formed. In order to form such a structure, the area of the second cover part 740c may be larger than the opening area of the through hole 710c.

Although it is illustrated that four second openings 750c are formed in the y-axis direction, the -y axis direction, the z axis direction, and the -z axis direction with respect to one venting part 700c, there is no particular limitation on the number of second openings 750c. Further, the number of the second openings 750c is not particularly limited as long as it does not coincide with the opening direction of the through opening 710c.

Due to the first cover part 720c and the second cover part 740c covering the through hole 710c, gas or flame does not pass through the through hole 710c in a straight line. That is, the discharge passage of the gas and flame may be bent at least twice by the first cover part 720c and the second cover part 740c.

Specifically, the opening direction of the through hole 710c and the opening direction of the second opening 750c may be different from each other. More specifically, the opening direction of the through hole 710c and the opening direction of the second opening 750c are perpendicular to each other. In one example, as shown in Fig. 16, the opening direction of the through hole 710c is a direction parallel to the x-axis, whereas the opening direction of the second opening 750c may be a direction parallel to the yz plane or a direction close to the yz plane. That is, by arranging the second cover part 740c in addition to the first cover part 720c, a passage through which the flame is discharged via the venting part 700c can be set more complicatedly. As the flame discharge passage becomes more complicate, it is possible to effectively block a flame or spark with a strong straight-line tendency. As the instantaneously bursting flame passes through the second cover part 740c and the first cover part 720c in sequence, the flame intensity may be lowered. In other words, the venting part 700c according to the present embodiment can have a further enhanced flame-extinguishing function.

Even though the terms indicating directions such as upper, lower, left, right, front and rear directions are used herein, it is obvious to those skilled **in** the art that these merely represent relative positions for convenience in explanation and may vary depending on a position of an observer, a position of an object, or the like.

The one or more battery modules according to the present embodiment as described above can be mounted together with various control and protection systems such as a battery management system (BMS) and a cooling system to form a battery pack.

The battery module or the battery pack can be applied to various devices. Specifically, these devices can be applied to vehicle means such as an electric bicycle, an electric vehicle, a hybrid vehicle, but the present disclosure is not limited thereto and can be applied to various devices that can use the secondary battery.

## Claims

1. A battery module (100a, 100b) comprising:
a battery cell stack (120) in which a plurality of battery cells are stacked;
a module frame (200) for housing the battery cell stack (120); and
end plates (410, 420) for covering the front and rear surfaces of the battery cell stack (120),
wherein at least one of the module frames (200) or the end plates (410, 420) comprises a venting part (v) for discharging gas and flame, and
wherein the venting part (700a-700c) has a shape that guides the discharge passage of the gas and flame so as to be bent,
wherein the venting part (700a-700c) comprises a through hole (710a-710c) formed in at least one of the module frames (200) and the end plates (410, 420); a first cover part (720a-720c) for covering the through hole (710a-710c); and a first opening (730a-730c) formed on one side of the first cover part (720a-720c) and communicating with the through hole (710a-710c),
wherein an opening direction of the through hole (710a-71oc) and an opening direction of the first opening (730a-730c) are perpendicular to each other,
wherein the venting part (700a-700c) is configured to guide the gas and flame to be discharged to the outside in a direction parallel to one surface of module frames (200) or the end plates (410, 420), and
**characterized in that**
the venting part (700a-700c) further comprises a second cover part (740a-740c) for covering the through hole (710a-71oc) while being located on the opposite side of the first cover part (720a-720c) with respect to the through hole (710a-710c); and a second opening (750a-750c) formed on one side of the second cover part (740a-740c) and communicating with the through hole (710a-710c).

2. The battery module according to claim 1,
wherein an area of the first cover part (720a-720c) is larger than an opening area of the through hole (710a-710c).

3. The battery module according to claim 1,
wherein an opening direction of the through hole (710a-71oc) is different from an opening direction of the first opening (730a-730c).

4. The battery module according to claim 1,
wherein an area of the second cover part (740a-740c) is larger than an opening area of the through hole (710a-710c).

5. The battery module according to claim 1,
wherein an opening direction of the through hole (710a-71oc) is different from an opening direction of the second opening (750a-750c).

6. The battery module according to claim 4,
wherein an opening direction of the through hole (710a-710c) and an opening direction of the second opening (750a-750c) are perpendicular to each other.

7. The battery module according to claim 1,
wherein the discharge passage of the gas and flame is bent at least twice by the first cover part (720a-720c) and the second cover part (740a-740c).

8. The battery module according to claim 1,
which further comprises an insulating cover located between the battery cell stack (120) and the end plate (410, 420),
wherein the venting part (700a-700c) is formed in the end plate (410, 420), and
an insulating cover opening is formed at a position corresponding to the venting part (700a-700c) of the insulating cover.

9. A battery pack comprising the battery module according to claim 1.

## Patentansprüche

1. Batteriemodul (1ooa, 100b), umfassend:
einen Batteriezellenstapel (120), in dem mehrere Batteriezellen gestapelt sind;
einen Modulrahmen (200) zur Aufnahme des Batteriezellenstapels (120); und
Endplatten (410, 420) zum Abdecken der Vorder- und Rückseite des Batteriezellenstapels (120),
wobei der Modulrahmen (200) und/oder die Endplatten (410, 420) ein Entlüftungsteil (v) zum Ableiten von Gas und Flammen umfasst, und
wobei das Entlüftungsteil (700a-700c) eine Form aufweist, die den Austrittsweg des Gases und der Flamme so lenkt, dass es gekrümmt ist,
wobei das Entlüftungsteil (700a-700c) ein Durchgangsloch (710a-710c) umfasst, das in dem Modulrahmen (200) und/oder den Endplatten (410, 420) ausgebildet ist; ein erstes Abdeckteil (720a-720c) zum Abdecken des Durchgangslochs (710a-710c); und eine erste Öffnung (730a-730c), die an einer Seite des ersten Abdeckteils (720a-720c) ausgebildet ist und mit dem Durchgangsloch (710a-710c) in Verbindung steht,
wobei eine Öffnungsrichtung des Durchgangslochs (710a-710c) und eine Öffnungsrichtung der ersten Öffnung (730a-730c) senkrecht zueinander stehen,
wobei das Entlüftungsteil (700a-700c) so ausgebildet ist, dass es das nach außen abzuführende Gas und die Flamme in einer Richtung parallel zu einer Oberfläche des Modulrahmens (200) oder der Endplatten (410, 420) leitet, und
**dadurch gekennzeichnet, dass** das Entlüftungsteil (700a-700c) ferner ein zweites Abdeckteil (740a-740c) zum Abdecken des Durchgangslochs (710a-710c) umfasst, das sich in Bezug auf das Durchgangsloch (710a-710c) auf der gegenüberliegenden Seite des ersten Abdeckteils (720a-720c) befindet; und eine zweite Öffnung (750a-750c), die an einer Seite des zweiten Abdeckteils (740a-740c) ausgebildet ist und mit dem Durchgangsloch (710a-710c) in Verbindung steht.

2. Batteriemodul nach Anspruch 1,
wobei eine Fläche des ersten Abdeckteils (720a-720c) größer ist als eine Öffnungsfläche des Durchgangslochs (710a-710c).

3. Das Batteriemodul nach Anspruch 1,
wobei sich die Öffnungsrichtung des Durchgangslochs (710a-710c) von der Öffnungsrichtung der ersten Öffnung (730a-730c) unterscheidet.

4. Batteriemodul nach Anspruch 1,
wobei eine Fläche des zweiten Abdeckteils (740a-740c) größer ist als eine Öffnungsfläche des Durchgangslochs (710a-710c).

5. Batteriemodul nach Anspruch 1,
wobei eine Öffnungsrichtung des Durchgangslochs (710a-710c) sich von einer Öffnungsrichtung der zweiten Öffnung (750a-750c) unterscheidet.

6. Batteriemodul nach Anspruch 4,
wobei die Öffnungsrichtung des Durchgangslochs (710a-710c) und die Öffnungsrichtung der zweiten Öffnung (750a-750c) senkrecht zueinander stehen.

7. Batteriemodul nach Anspruch 1,
wobei der Austrittskanal für das Gas und die Flamme durch das erste Abdeckteil (720a-720c) und das zweite Abdeckteil (740a-740c) zumindest zweimal gebogen ist.

8. Batteriemodul nach Anspruch 1,
das ferner eine isolierende Abdeckung umfasst, die zwischen dem Batteriezellenstapel (120) und der Endplatte (410, 420) angeordnet ist,
wobei das Entlüftungsteil (700a-700c) in der Endplatte (410, 420) ausgebildet ist, und
wobei eine Öffnung in der Isolierabdeckung an einer Position ausgebildet ist, die dem Entlüftungsteil (700a-700c) der Isolierabdeckung entspricht.

9. Ein Batteriepack, das das Batteriemodul gemäß Anspruch 1 umfasst.

## Revendications

1. Module de batterie (100a, 100b) comprenant :
un empilement de cellules de batterie (120) dans lequel sont empilées une pluralité de cellules de batterie ;
un châssis de module (200) dans lequel est contenu l'empilement de cellules de batterie (120) ; et
des flasques (410, 420) pour couvrir les surfaces antérieure et postérieure de l'empilement de cellules de batterie (120) ;
au moins un des châssis de module (200) ou des flasques (410, 420) comprenant un dispositif d'évacuation (v) pour décharger le gaz et les flammes, et
le dispositif d'évacuation (700a-700c) ayant une forme qui guide le conduit de décharge du gaz et des flammes afin de pouvoir être plié,
le dispositif d'évacuation (700a-700c) possédant un orifice traversant (710a-710c) formé dans au moins un des châssis de module (200) et des flasques (410, 420) ; un premier dispositif de couverture (720a-720c) pour couvrir l'orifice traversant (710a-710c) ; et une première ouverture (730a-730c) formée sur un côté du premier dispositif de couverture (720a-720c), et communiquant avec l'orifice traversant (710a-710c),
une direction d'ouverture de l'orifice traversant (710a-710c) et une direction d'ouverture de la première ouverture (730a-730c) étant perpendiculaires entre elles,
le dispositif d'évacuation (700a-700c) étant configuré pour guider le gaz et la flamme à évacuer à l'extérieur dans une direction parallèle à une surface des châssis de module (200) ou des flasques (410, 420), et
**caractérisé en ce que**
le dispositif d'évacuation (700a-700c) comprend en outre un deuxième dispositif de couverture (740a-740c) pour couvrir l'orifice traversant (710a-710c), tout en étant positionné sur le côté opposé du premier dispositif de couverture (720a-720c) relativement à l'orifice traversant (710a-710c) ; et une deuxième ouverture (750a-750c) pratiquée sur un côté du deuxième dispositif de couverture (740a-740c), et communiquant avec l'orifice traversant (710a-710c).

2. Module de batterie selon la revendication 1,
une superficie du premier dispositif de couverture (720a-720c) étant supérieure à une superficie d'ouverture de l'orifice traversant (710a-710c).

3. Module de batterie selon la revendication 1,
une direction d'ouverture de l'orifice traversant (710a-710c) étant différente d'une direction d'ouverture de la première ouverture (730a-730c).

4. Module de batterie selon la revendication 1,
une superficie du deuxième dispositif de couverture (740a-740c) étant supérieure à une superficie d'ouverture de l'orifice traversant (710a-710c).

5. Module de batterie selon la revendication 1,
une direction d'ouverture de l'orifice traversant (710a-710c) étant différente d'une direction d'ouverture de la deuxième ouverture (750a-750c).

6. Module de batterie selon la revendication 4,
une direction d'ouverture de l'orifice traversant (710a-710c) et une direction d'ouverture de la deuxième ouverture (750a-750c) étant perpendiculaires entre elles.

7. Module de batterie selon la revendication 1,
le conduit de décharge du gaz et de la flamme étant plié au moins deux fois par le premier dispositif de couverture (720a-720c) et le deuxième dispositif de couverture (740a-740c).

8. Module de batterie selon la revendication 1,
comprenant en outre un revêtement isolant positionné entre l'empilement de cellules de batterie (120) et la flasque (410, 420),
le dispositif d'évacuation (700a-700c) étant agencé dans la flasque (410, 420), et
une ouverture dans le revêtement isolant étant pratiquée dans une position correspondant au dispositif d'évacuation (700a-700c) du revêtement isolant.

9. Bloc-batterie comprenant le module de batterie selon la revendication 1,
